# EUROPEAN PATENT APPLICATION

(11) **EP 4 746 189 A1**
(43) Date of publication of application: **20.05.2026**
(21) Application number: 25205138.8
(22) Date of filing: 26.09.2025
(51) Int. Cl.: H01M 50/691, H01M 10/04

(54) **SUCTION APPARATUS AND SUCTION HEAD FOR REMOVING REMAINING ELECTROLYTE IN SECONDARY BATTERY MANUFACTURING AND METHOD OF MANUFACTURING SECONDARY BATTERY**

(30) Priority: 14.11.2024 KR 20240162551
(71) Applicant: Samsung SDI Co., Ltd., Yongin-si, Gyeongsangnam-do 17084 (KR)
(72) Inventor: SEO, Myunghwan, 17084 Yongin-si (KR); YANG, Jiho, 17084 Yongin-si (KR); UHM, Jushik, 17084 Yongin-si (KR); LEE, Kilyoung, 17084 Yongin-si (KR); KWAK, Byeongmin, 17084 Yongin-si (KR); KIM, Hyeju, 17084 Yongin-si (KR); BAEK, Junho, 17084 Yongin-si (KR)
(74) Representative: Marks & Clerk LLP

(57) **Abstract**

The present disclosure is directed to providing a suction apparatus (20) and suction head (30) for removing remaining electrolyte in secondary battery (13) manufacturing and a method of manufacturing a secondary battery (13), which prevent corrosion or whitening caused by an electrolyte by quickly suctioning and removing a remaining electrolyte in a beading portion of a can using vacuum pressure and prevent the electrolyte from scattering to the surrounding areas when a negative pressure is applied. The suction apparatus for removing remaining electrolyte includes a positioning jig (23) configured to position a battery can in which an electrolyte is injected, a suction head (30), a head ascending/descending part (25), and a negative pressure supply unit (47).

## Description

### FIELD

The present disclosure relates to a secondary battery, and more specifically, to a suction apparatus and suction head for removing remaining electrolyte in secondary battery manufacturing and a method of manufacturing the secondary battery.

### BACKGROUND

Secondary batteries include pouch-type secondary batteries, prismatic secondary batteries, and cylindrical secondary batteries. Unlike primary batteries that cannot be charged, secondary batteries are batteries that can be charged and discharged. A secondary battery may include an electrode assembly consisting of a positive electrode plate, a separator, and a negative electrode plate, a case (or can) for accommodating the electrode assembly, a substrate tab extending from an uncoated portion of each electrode plate of the electrode assembly, and an external terminal connected to the substrate tab.

In the case of cylindrical secondary batteries, when an electrolyte is injected into the can, a problem may occur where some of the electrolyte gets spilled on a beading portion at an upper end of the can in addition to an intended position. The electrolyte that gets spilled on the beading portion may move to the outside through a gap between a gasket and the can during crimping processing, causing problems such as corrosion or whitening. A technology for efficiently removing an electrolyte remaining in a beading portion after performing an electrolyte injection is required.

The herein information disclosed in this Background section is for enhancement of understanding of the background of the present disclosure, and therefore, it may contain information that does not constitute a related (or prior) art.

### SUMMARY

The present disclosure is directed to providing a suction apparatus and suction head for removing remaining electrolyte in secondary battery manufacturing and a method of manufacturing the secondary battery, which prevent corrosion or whitening caused by the electrolyte by quickly suctioning and removing the remaining electrolyte in a beading portion of a can and prevent the electrolyte from scattering to the surrounding areas when a negative pressure is applied.

According to aspects of the present disclosure, there is provided a suction apparatus for removing remaining electrolyte in secondary battery manufacturing, which includes a positioning jig configured to provide a receiving space that opens upwardly at an upper side of a beading portion and position a battery can in which an electrolyte is injected, a suction head installed to ascend or descend above the positioning jig and seated in the receiving space when an electrolyte remaining in the beading portion is suctioned and discharged, a head ascending/descending part configured to raise and lower the suction head, and a negative pressure supply unit configured to provide a negative pressure to the suction head while the suction head is seated in the receiving space and suction and discharge the remaining electrolyte.

According to aspects of the present disclosure, there is provided a suction head which provides a receiving space that opens upwardly at an upper side of a beading portion, is installed to ascend or descend above a battery can in which an electrolyte is injected and suctions and discharges a remaining electrolyte in the beading portion through a negative pressure provided externally while seated in the receiving space and in which an inner passage configured to pass the electrolyte through is formed.

According to aspects of the present disclosure, there is provided a method of manufacturing a secondary battery which includes a positioning operation of providing a receiving space that opens upwardly at an upper side of a beading portion and positioning a battery can in which an electrolyte is injected, a head seating operation of seating a suction head in the receiving space of the battery can that is home-positioned, a suctioning/discharging operation of providing a negative pressure into the suction head and suctioning and discharging the electrolyte remaining in the beading portion, and a head ascending operation of raising the suction head after the suctioning/discharging operation is completed.

At least some of the above and other features of the invention are set out in the claims.

Aspects and features of the present disclosure are not limited to those described herein, and other aspects and features not specifically mentioned herein will be clearly understood by those skilled in the art from the description of the present disclosure herein.

### BRIEF DESCRIPTION OF THE DRAWINGS

The following drawings attached to the present specification illustrate embodiments of the present disclosure and further describe aspects and features of the present disclosure together with the detailed description of the present disclosure. Thus, the present disclosure should not be construed as being limited to the drawings, in which:
FIG. 1 is a cross-sectional view illustrating a cylindrical battery manufactured using a suction apparatus according to embodiments of the present disclosure;
FIGS. 2 and 3 are diagrams for describing a configuration and an operating method of the suction apparatus according to embodiments of the present disclosure;
FIGS. 4 and 5 are diagrams for describing another configuration and an operating method of the suction apparatus according to embodiments of the present disclosure;
FIG. 6 is a perspective view illustrating a suction head according to embodiments of the present disclosure;
FIG. 7 is a diagram illustrating the suction head shown in FIG. 6 viewed from a different angle;
FIG. 8 is a diagram illustrating an air flow path in the suction head of FIG. 7;
FIG. 9 is a plan view illustrating the suction head of FIG. 6;
FIG. 10 is a bottom view illustrating the suction head shown in FIG. 6;
FIG. 11 is a cut perspective view illustrating a state in which the suction head of FIG. 6 is inserted in a can;
FIGS. 12 and 13 are diagrams for describing a suction principle of the suction head of FIG. 6;
FIG. 14 is a cross-sectional view illustrating another example of the suction head according to embodiments of the present disclosure;
FIG. 15 is a cross-sectional view illustrating still another example of the suction head according to embodiments of the present disclosure;
FIG. 16 is a perspective view illustrating a secondary battery pack in which the cylindrical battery of FIG. 1 is embedded;
FIG. 17 is a diagram illustrating a state in which the secondary battery pack of FIG. 16 is applied to a vehicle; and
FIG. 18 is a flowchart illustrating a method of manufacturing a secondary battery according to embodiments of the present disclosure.

### DETAILED DESCRIPTION

Hereinafter, embodiments of the present disclosure will be described, in detail, with reference to the accompanying drawings. The terms or words used in the present specification and claims are not to be narrowly interpreted according to their general or dictionary meanings and should be interpreted as having meanings and concepts that are consistent with the technical idea of the present disclosure on the basis of the principle that an inventor can be his/her own lexicographer to appropriately define concepts of terms to describe his/her disclosure in the best way. The embodiments described in this specification and the configurations shown in the drawings are only some embodiments of the present disclosure and do not represent all of the aspects, features, and embodiments of the present disclosure. Accordingly, it should be understood that there may be various equivalents and modifications that can replace or modify one or more embodiments or features therein described herein at the time of filing this application.

It will be further understood that the terms "includes," "including," "comprises," and/or "comprising," if used in this specification, specify the presence of stated features, integers, steps, operations, elements, and/or components but do not preclude the presence or addition of one or more other features, integers, steps, operations, elements, components, and/or groups thereof.

In the figures, dimensions of the various elements, layers, etc. may be exaggerated for clarity of illustration. The same reference numerals designate the same elements.

References to two compared elements, features, etc. as being "the same" may mean that they are "substantially the same." Thus, the phrase "substantially the same" may include a case having a deviation that is considered low in the art, for example, a deviation of 5% or less. In addition, uniformity of a parameter in a predetermined region may imply uniformity from an average perspective.

Although the terms first, second, and the like are used to describe various components, these components are substantially not limited by these terms. These terms are only used for distinguishing one component from another component, and unless otherwise stated, it is of course that a first component may also be a second component.

Throughout the specification, unless otherwise stated, each element may be singular or plural.

Arranging an arbitrary element "above (or below)" or "on (under)" another element may mean that the arbitrary element may contact the upper (or lower) surface of the element and another element may also be interposed between the element and the arbitrary element located on (or under) the element.

In addition, it will be understood that if a component is referred to as being "linked," "coupled," or "connected" to another component, the elements may be directly "coupled," "linked" or "connected" to each other, or another component may be "interposed" between the components."

As used herein, the term "and/or" includes any and all combinations of one or more of the associated listed items. Further, the use of "may" if describing embodiments of the present disclosure relates to "one or more embodiments of the present disclosure." Expressions, such as "at least one of" and "any one of," if preceding a list of elements, modify the entire list of elements and do not modify the individual elements of the list.

Throughout the specification, if "A and/or B" is stated, it means A, B or A and B, unless otherwise stated and if "C to D" is stated, it means C or more and D or less, unless otherwise stated.

When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C.

As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed herein could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below.

The terminology used herein is for the purpose of describing embodiments of the present disclosure and is not intended to limit the present disclosure.

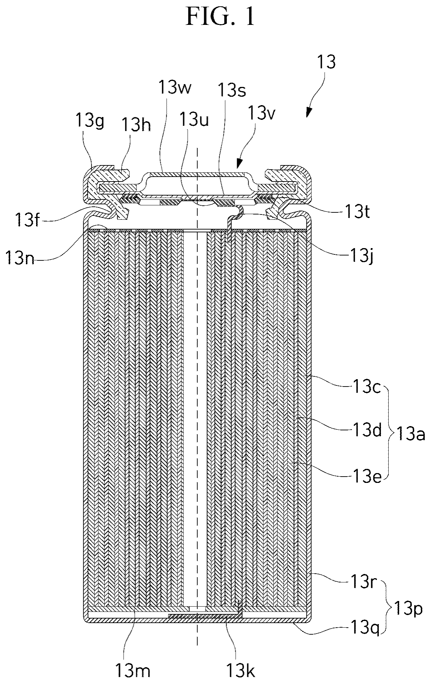

FIG. 1 is a cross-sectional view illustrating a cylindrical battery manufactured using a suction apparatus according to embodiments of the present disclosure.

As shown, the secondary battery 13 includes an electrode assembly 13a, a case 13p accommodating the electrode assembly 13a and an electrolyte therein, a cap assembly 13v coupled to an opening of the case 13p to seal the case 13p, and an insulating plate 13n positioned between the electrode assembly 13a and the cap assembly 13v inside the case.

The electrode assembly 13a may include a separator 13d and a first electrode 13c and a second electrode 13e positioned with the separator interposed therebetween and may be wound in a jelly-roll shape.

The first electrode 13c includes a first substrate and a first active material layer on the first substrate. A first lead tab 13j may extend outwardly from a first uncoated portion of the first substrate at where the first active material layer is not located, and the first lead tab 13j may be electrically connected to the cap assembly 13v.

The second electrode 13e includes a second substrate and a second active material layer on the second substrate. A second lead tab 13k may extend outwardly from a second uncoated portion of the second substrate at where the second active material layer is not located, and the second lead tab 13k may be electrically connected to the case. The first lead tab 13j and the second lead tab 13k may extend in opposite directions.

The first electrode 13c may act as a positive electrode. In such an embodiment, the first substrate may be made of, for example, an aluminum foil, and the first active material layer may include, for example, a transition metal oxide. The second electrode 13e may act as a negative electrode. In such an embodiment, the second substrate may be made of, for example, a copper foil or a nickel foil, and the second active material layer may include graphite, for example.

The separator 13d prevents a short circuit between the first electrode and the second electrode while allowing movement of lithium ions therebetween. The separator 13d may be made of, for example, a polyethylene film, a polypropylene film, a polyethylene-polypropylene film, or the like.

The case 13p accommodates the electrode assembly 13a and, together with the cap assembly 13v, forms the external appearance of the secondary battery. The case 13p may have a substantially cylindrical body portion 13r and a bottom portion 13q connected to one side (e.g., to one end) of the body portion 13r. A beading part 13f deformed inwardly may be formed in the body portion 13r, and a crimping part 13g bent inwardly may be formed at an open end of the body portion 13r.

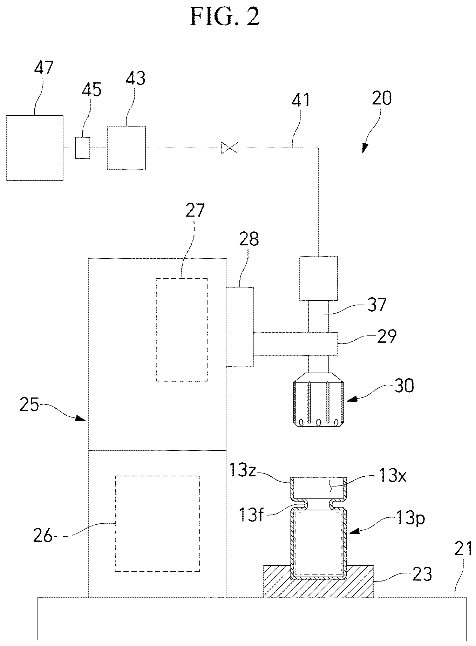

The crimping part 13g is a portion formed by crimping the crimping target portion 13z of FIG. 2 to be folded inward. The crimping target portion 13z is a portion having a predetermined diameter and extending vertically. The crimping target portion 13z is in a state prior to performing plastic processing and opens the beading portion 13f upwardly.

The beading part 13f can reduce or prevent movement of the electrode assembly 13a inside the case 13p and can facilitate seating of the gasket 13h and the cap assembly 13v. The crimping part 13g may firmly fix the cap assembly 13v by pressing the edge of the case 13p against the gasket 13h. The case 13p may be formed of steel plated with nickel, for example.

The cap assembly 13v may be fixed to the inside of the crimping part 13g by a gasket 13h to seal the case 13p. The cap assembly 13v may include a cap up 13w, a safety vent 13s, a cap down 13t, an insulating member, and a sub plate 13u but is not limited thereto and may be modified in various ways.

The cap up 13w may be positioned at the uppermost part of the cap assembly 13v. The cap up 13w may include a terminal part that protrudes upwardly and is connected to an external circuit, and an outlet for discharging gas may be arranged around the terminal part.

The safety vent 13s may be located under the cap up 13w. The safety vent 13s may include a protrusion part that protrudes convexly downwardly and is connected to the sub plate 13u, and at least one notch may be formed in the safety vent around the protrusion part.

If gas is generated due to overcharging or abnormal operation of the secondary battery, the protrusion part is deformed upwardly by the pressure and separates from the sub plate 13u while the safety vent 13s is cut (e.g., bursts or tears) along the notch. The cut safety vent 13s may prevent the secondary battery from exploding by allowing for the gas to be discharged to the outside.

The cap down 13t may be below the safety vent 13s. The cap down 13t may have a first opening for exposing the protrusion part of the safety vent 13s and a second opening for gas discharge. The insulating member may be positioned between the safety vent 13s and the cap down 13t to insulate the safety vent 13s and the cap down 13t.

The sub plate 13u may be under the cap down 13t. The sub plate 13u may be fixed to a lower surface of the cap down 13t to block the first opening of the cap down 13t, and the protrusion part of the safety vent 13s may be fixed to the sub plate 13u. The first lead tab 13j, which is drawn out from the electrode assembly 13a may be fixed to the sub plate 13u. Accordingly, the cap up 13w, the safety vent 13s , the cap down 13t, and the sub plate 13u may be electrically connected to the first electrode 13c of the electrode assembly 13a.

The insulating plate 13n may be positioned to be in contact with the electrode assembly 13a below the beading part 13. The insulating plate 13n may have a tab opening through which the first lead tab 13j is drawn out. The cap assembly 13v, which is electrically connected to the first electrode by the first lead tab, may face the electrode assembly with an insulating plate 13n interposed therebetween and may maintain a state of being insulated (e.g., electrically insulated) from the electrode assembly 13a by the insulating plate 13n. Meanwhile, another insulating plate 13m may be included for insulation between the electrode assembly 13a and the bottom portion 13q of the case 13p.

Hereinafter, suitable materials that may be usable for the secondary battery according to embodiments of the present disclosure will be described.

As the positive electrode active material, a compound capable of reversibly intercalating/deintercalating lithium (e.g., a lithiated intercalation compound) may be used. For example, at least one of a composite oxide of lithium and a metal selected from cobalt, manganese, nickel, and combinations thereof may be used.

The composite oxide may be a lithium transition metal composite oxide, and examples thereof may include a lithium nickel-based oxide, a lithium cobalt-based oxide, a lithium manganese-based oxide, a lithium iron phosphate-based compound, a cobalt-free nickel-manganese-based oxide, or a combination thereof.

As an example, a compound represented by any one of the following formulas may be used: LiₐA_{1-b}X_{b}O_{2-c}D_{c} (0.90≤a≤1.8, 0≤b≤0.5, 0≤c≤0.05); LiₐMn_{2-b}X_{b}O_{4-c}D_{c} (0.90≤a≤1.8, 0≤b≤0.5, 0≤c≤0.05); LiₐNi_{1-b-c}CO_{b}X_{c}O_{2-α}D_{α} (0.90≤a≤1.8, 0≤b≤0.5, 0≤c≤0.5, 0<α<2); LiₐNi_{1-b-c}Mn_{b}X_{c}O_{2-α}D_{α} (0.90≤a≤1.8, 0≤b≤0.5, 0≤c≤0.5, 0<α<2); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMn_{1-b}G_{b}O₂ (0.90≤a≤1.8, 0.001≤b≤0.1); LiₐMn₂G_{b}O₄ (0.90≤a≤1.8, 0.001≤b≤0.1); LiₐMn_{1-g}G_{g}PO₄ (0.90≤a≤1.8, 0≤g≤0.5); Li_{(3-f)}Fe₂(PO₄)₃ (0≤f≤2); and LiₐFePO₄ (0.90≤a≤1.8).

In the above formulas: A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and L¹ is Mn, Al, or a combination thereof.

A positive electrode for a lithium secondary battery may include a substrate and a positive electrode active material layer formed on the substrate. The positive electrode active material layer may include a positive electrode active material and may further include a binder and/or a conductive material.

The content of the positive electrode active material is in a range of about 90 wt% to about 99 wt% on the basis of 100 wt% of the positive electrode active material layer, and the content of the binder and the conductive material is in a range of about 0.5 wt% to about 5 wt%, respectively, on the basis of 100 wt% of the positive electrode active material layer.

The substrate may be aluminum (Al) but is not limited thereto.

The negative electrode active material may include a material capable of reversibly intercalating/deintercalating lithium ions, lithium metal, an alloy of lithium metal, a material capable of being doped and undoped with lithium, or a transition metal oxide.

The material capable of reversibly intercalating/deintercalating lithium ions may be a carbon-based negative electrode active material, which may include, for example, crystalline carbon, amorphous carbon, or a combination thereof. Examples of the crystalline carbon may include graphite, such as natural graphite or artificial graphite, and examples of the amorphous carbon may include soft carbon, hard carbon, a pitch carbide, a meso-phase pitch carbide, sintered coke, and the like.

A Si-based negative electrode active material or a Sn-based negative electrode active material may be used as the material capable of being doped and undoped with lithium. The Si-based negative electrode active material may be silicon, a silicon-carbon composite, SiOₓ (0<x≤2), a Si-based alloy, or a combination thereof.

The silicon-carbon composite may be a composite of silicon and amorphous carbon. According to embodiments, the silicon-carbon composite may be in the form of a silicon particle and amorphous carbon coated on the surface of the silicon particle.

The silicon-carbon composite may further include crystalline carbon. For example, the silicon-carbon composite may include a core including crystalline carbon and silicon particle and an amorphous carbon coating layer on the surface of the core.

A negative electrode for a lithium secondary battery may include a substrate and a negative electrode active material layer disposed on the substrate. The negative electrode active material layer may include a negative electrode active material and may further include a binder and/or a conductive material.

For example, the negative electrode active material layer may include about 90 wt % to about 99.5 wt % of a negative electrode active material, about 0.5 wt % to about 5 wt % of a binder, and about 0 wt % to about 5 wt % of a conductive material.

A non-aqueous binder, an aqueous binder, a dry binder, or a combination thereof may be used as the binder. When an aqueous binder is used as the negative electrode binder, a cellulose-based compound capable of imparting viscosity may be further included.

As the negative electrode substrate, one selected from copper foil, nickel foil, stainless steel foil, titanium foil, nickel foam, copper foam, conductive metal-coated polymer substrate, and combinations thereof may be used.

An electrolyte for a lithium secondary battery may include a non-aqueous organic solvent and a lithium salt.

The non-aqueous organic solvent acts as a medium through which ions involved in the electrochemical reaction of the battery can move.

The non-aqueous organic solvent may be a carbonate-based, an ester-based, an ether-based, a ketone-based, an alcohol-based solvent, an aprotic solvent, and may be used alone or in combination of two or more.

In addition, when a carbonate-based solvent is used, a mixture of cyclic carbonate and chain carbonate may be used.

Depending on the type of lithium secondary battery, a separator may be present between the first electrode plate (e.g., the negative electrode) and the second electrode plate (e.g., the positive electrode). As the separator, polyethylene, polypropylene, polyvinylidene fluoride, or a multilayer film including two or more layers thereof may be used.

The separator may include a porous substrate and a coating layer including an organic material, an inorganic material, or a combination thereof on one or both surfaces of the porous substrate.

The organic material may include a polyvinylidene fluoride-based polymer or a (meth)acrylic polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and combinations thereof but is not limited thereto.

The organic material and the inorganic material may be mixed in one coating layer or may be in the form of a coating layer including (or containing) an organic material and a coating layer including (or containing) an inorganic material that are stacked on each other.

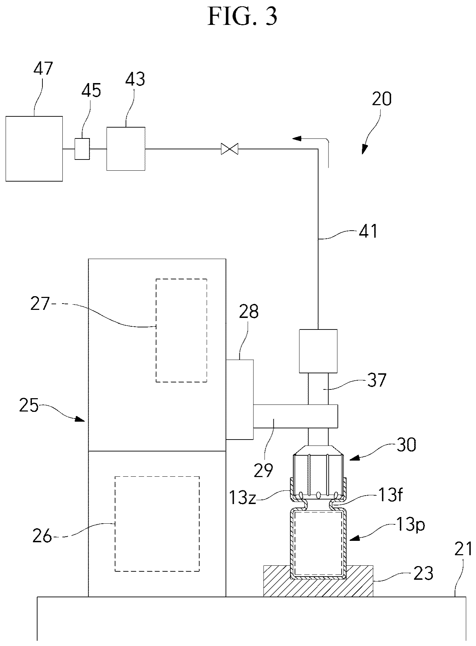

FIGS. 2 and 3 are diagrams for describing a configuration and an operating method of a suction apparatus 20 according to embodiments of the present disclosure. FIG. 2 shows a state prior to lowering of a suction head 30, and FIG. 3 shows a state subsequent to the lowering of the suction head 30.

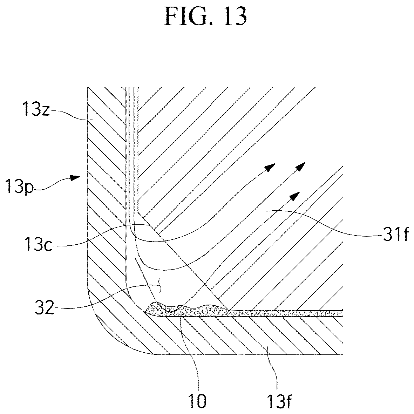

The purpose of the suction apparatus in the present description is to suction a remaining electrolyte 10 of FIG. 13, which remains in the beading portion 13f, and discharge the remaining electrolyte 10 to the outside. The remaining electrolyte 10 is an electrolyte that remains when some of the electrolyte injected into battery can 13p splashes out to the beading portion 13f. When crimping is performed without removing the remaining electrolyte 10, the remaining electrolyte 10 may be extruded to the outside, causing a corrosion or whitening phenomenon. Ultimately, the suction apparatus 20 of the present embodiment may prevent defects from being generated in the secondary battery by removing the remaining electrolyte from the beading portion 13f prior to performing the crimping processing.

As shown in the drawings, the suction apparatus 20 for removing remaining electrolyte in secondary battery manufacturing according to the present embodiment may include a positioning jig 23, a suction head 30, a discharge pipe 37, a head ascending/descending part 25, and a negative pressure supply unit.

The positioning jig 23 is fixed on a horizontal table 21 and may serve to position the battery can 13p below the suction head 30 vertically. The battery can 13p may be supported vertically on the positioning jig 23.

The battery can 13p may provide a receiving space 13x on an upper side of the beading portion 13f. The receiving space 13x may be a space formed by the beading portion 13f and the crimping target portion 13z. The crimping target portion 13z is a portion where the cap assembly 13v and the gasket 13h are mounted in the receiving space and then crimped inward. The crimping target portion 13z has a predetermined diameter and may be disposed vertically. In addition, the electrode assembly 13a may be accommodated in the battery can 13p, and an interior of the battery can 13p may be filled with an electrolyte. In addition, the electrolyte may remain in the beading portion 13f.

The suction head 30 may be installed to ascend and descend vertically above the positioning jig 23 and seated in the receiving space 13x in order to suction and discharge the electrolyte remaining in the beading portion 13f. The suction head 30 may perform ascending/descending movement by the head ascending/descending part 25. The suction head 30 may be manufactured with a synthetic resin through molding. Alternatively, when the suction head 30 is made of a metal, at least a portion in contact with the electrolyte may be coated with a corrosion-resistant cover. The corrosion-resistant cover may be a synthetic resin film.

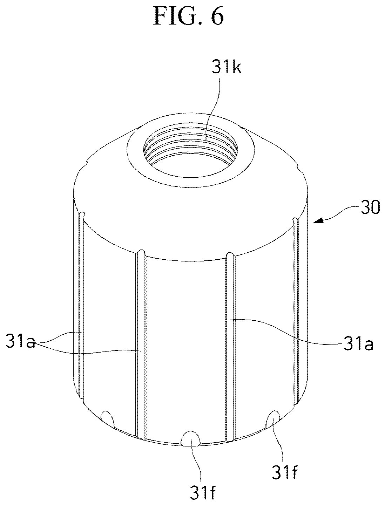

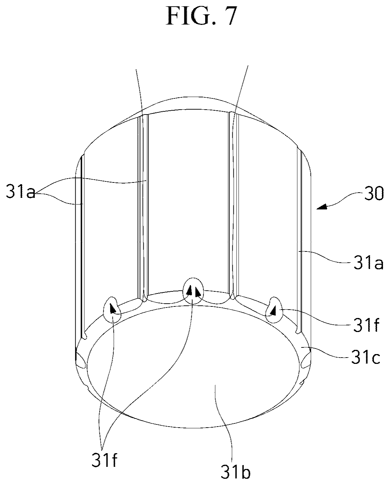

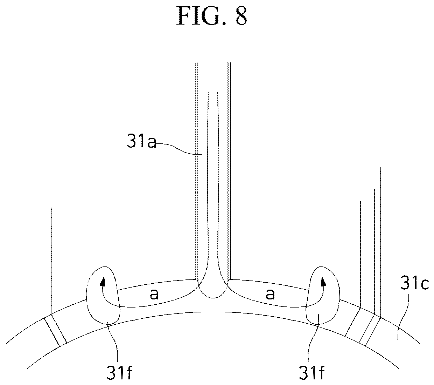

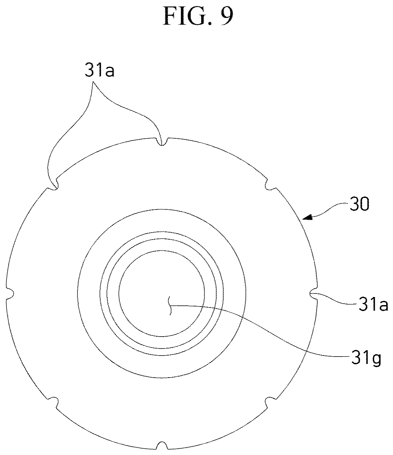

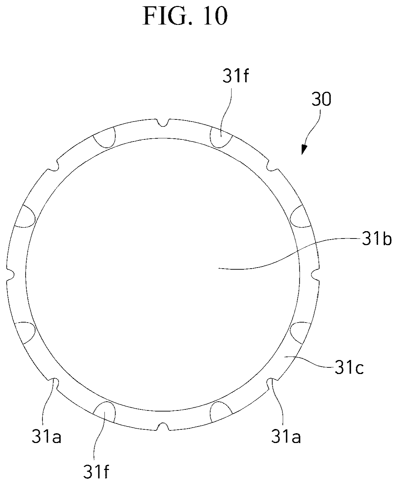

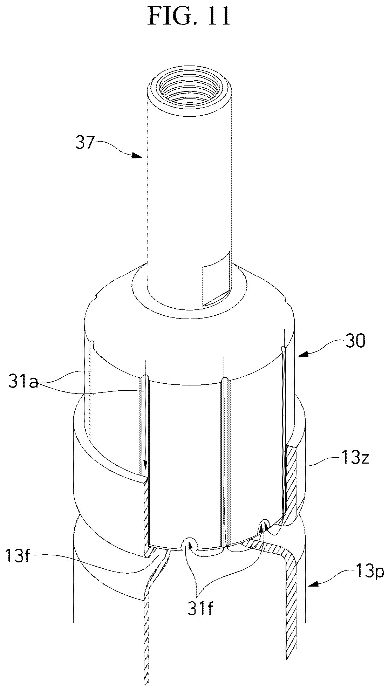

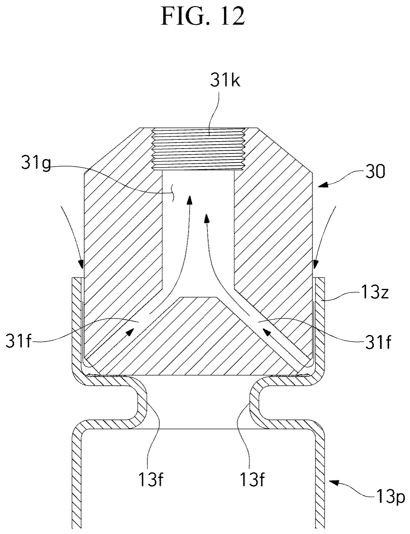

A detailed structure and a suction method of the suction head 30 will be described with reference to FIGS. 6 to 13. FIG. 6 is a perspective view illustrating a suction head according to embodiments of the present disclosure. FIG. 7 is a diagram illustrating the suction head shown in FIG. 6 viewed from a different angle. FIG. 8 is a diagram illustrating an air flow path in the suction head of FIG. 7. FIG. 9 is a plan view illustrating the suction head of FIG. 6. FIG. 10 is a bottom view illustrating the suction head shown in FIG. 6. FIG. 11 is a cut perspective view illustrating a state in which the suction head of FIG. 6 is inserted in a can. FIGS. 12 and 13 are diagrams for describing a suction principle of the suction head of FIG. 6.

As shown in the drawings, the suction head 30 may have a shape of a cylinder with a substantially predetermined diameter. A diameter of the suction head 30 is smaller than an inner diameter of the crimping target portion 13z and thus may be accommodated in the receiving space 13x of the battery can 13p. An outer surface of the suction head 30 may be in surface contact with an inner surface of the crimping target portion 13z. That is, the suction head 30 may be surrounded (e.g., partially surrounded) by the crimping target portion 13z while seated in the receiving space 13x. In addition, a lower edge of the suction head 30 may be caught on the beading portion 13f while the suction head 30 is accommodated in the receiving space 13x.

An inner passage may be formed in an interior of the suction head 30. The inner passage is a passage through which the remaining electrolyte in the beading portion 13f may be suctioned to move upwardly when the negative pressure supply unit is operating. The inner passage may include a first passage 31f (or a plurality of first passages 31f) and a second passage 31g.

In addition, a lower inclined surface 31c may be provided at a lower edge of the suction head 30, that is, at a corner where the outer surface of the suction head 30 and a bottom surface 31b of FIG. 7 meet. The lower inclined surface 31c may be formed by chamfering. An inclination angle of the lower inclined surface 31c may be 45 degrees with respect to a horizontal surface.

The reason why the lower inclined surface 31c is formed by machining the suction head 30 is to secure a suction space 32 of FIG. 13. The suction space 32 is a space formed between the lower inclined surface 31c and the battery can 13p. That is, the suction space 32 is a space in which a portion where the crimping target portion 13z and the beading portion 13f meet faces the lower inclined surface 31c. The suction space 32 extends in a circumferential direction of the suction head 30. Therefore, the remaining electrolyte 10 in the beading portion 13f is movable in the circumferential direction of the suction head 30 within the suction space 32.

Meanwhile, a lower end portion of the first passage 31f is open to face the lower inclined surface 31c and may be symmetric based on a central axis of the suction head 30. The applied number of first passages 31f may be varied in various ways through other embodiments. The first passage 31f may be inclined upwardly toward the second passage 31g. A lower end portion of the first passage 31f may be open diagonally through the lower inclined surface 31c. In addition, an upper end portion of the first passage 31f may communicate with the second passage 31g. An angle of the first passage 31f with respect to a horizontal surface may be about 45 degrees.

In addition, the second passage 31g is formed on a central axis portion of the suction head 30 and is a passage extending vertically. A female thread 31k may be formed in an upper portion of the second passage 31g. A discharge pipe 37 may be screw-coupled to the female thread 31k. The discharge pipe 37 is a pipe-shaped member that is connectable to the negative pressure supply unit.

In particular, a flow cross-sectional area of the second passage 31g may be greater than the sum of a flow cross-sectional areas of all first passages 31f. For example, when the sum of flow cross-sectional areas of eight first passages 31f is 1 cm², the flow cross-sectional area of the second passage 31g is wider than 1 cm². Due to this structure, the suction and discharging of the remaining electrolyte 10 may be performed more efficiently.

Meanwhile, an introduction passage 31a (e.g., a plurality of introduction passages 31a) may be formed on the outer surface of the suction head 30. The introduction passage 31a is a straight groove parallel to the second passage 31g and may guide outer air into the herein-described suction space 32. Intervals between the introduction passages 31a are all the same, and the introduction passages 31a may be positioned between the first passages 31f as shown in FIGS. 7 and 8. Thus, air descending through the introduction passage 31a branches into two directions after reaching the suction space 32 and may be introduced into the first passage 31f in a direction of an arrow a in FIG. 8.

As shown in FIGS. 11 and 12, by applying the introduction passages 31a, even when the outer surface of the suction head 30 is in complete contact with the crimping target portion 13z, air may be smoothly introduced into the suction space 32. FIG. 13 shows a state in which the air passing through the introduction passage 31a is introduced into the suction space 32 and then suctioned into the first passage 31f. Since a flow rate of the suctioned air is fast, the remaining electrolyte 10 may be suctioned and discharged to the outside through the first passages 31f and the second passage 31g as a result of riding the air flow.

As described herein, the suction head 30 of the present embodiment serves to efficiently remove the remaining electrolyte 10 remaining in the beading portion 13f of the battery can. The reason why the remaining electrolyte 10 may be efficiently removed is that the suction head 30 has a cylindrical structure that can be accommodated in the receiving space 13x of the battery can and also the suction space 32 is secured. The suction space 32 extends in the circumferential direction of the suction head 30 and serves as a passage through which the electrolyte is more easily moveable.

Meanwhile, the head ascending/descending part 25 may serve to raise and lower the suction head 30. The head ascending/descending part 25 is shown in FIG. 1.

The head ascending/descending part 25 may include an actuator 27, an ascending/descending body 28, an ascending/descending arm 29, and a controller 26. The actuator 27 is controlled by controller 26 and may ascend and descend the ascending/descending body 28. The actuator 27 may be an electronic or pneumatic actuator.

The ascending/descending body 28 may perform an ascending/descending movement via the actuator 27 and may be provided with the ascending/descending arm 29 on one side. The ascending/descending arm 29 horizontally extends while fixed to the ascending/descending body 28 and may be coupled to the discharge pipe 37. Ultimately, the suction head 30 may ascend and descend repeatedly via the actuator 27.

FIG. 2 shows a state in which the suction head 30 is raised. In the state in which the suction head 30 is raised, when a battery can 13p to be processed is placed on the positioning jig 23 or when the removal of the remaining electrolyte is completed, the battery can is unloaded.

FIG. 3 shows a state in which the suction head 30 is lowered to be inserted into the receiving space 13x. As described herein, the remaining electrolyte may be suctioned and discharged by providing a negative pressure while the lower edge of the suction head 30 is caught on the beading portion 13f.

The negative pressure supply unit applied in FIGS. 2 and 3 may include a negative pressure generator 47, a filter module 45, and a trap 43. In addition, the trap 43 may be connected to discharge pipe 37 through a fluorine resin tube 41. The negative pressure generator 47 is a negative pressure pump that may be controlled by the controller 26. When the negative pressure generator 47 operates, the suction head 30 may start to suction.

A mixture of air and the remaining electrolyte 10, which are suctioned by the suction head 30, may be moved to the trap 43 through the discharge pipe 37 and the fluorine resin tube 41 due to the action of negative pressure. The remaining electrolyte 10 of the mixture may be collected in the trap 43. In addition, the air separated from the remaining electrolyte 10 may pass through the negative pressure generator 47 through the filter module 45 to be discharged into the atmosphere. The filter module 45 may filter an electrolyte in a gaseous state contained in the air. Since the filter module 45 is applied, the negative pressure generator 47 does not become corroded due to an electrolyte component.

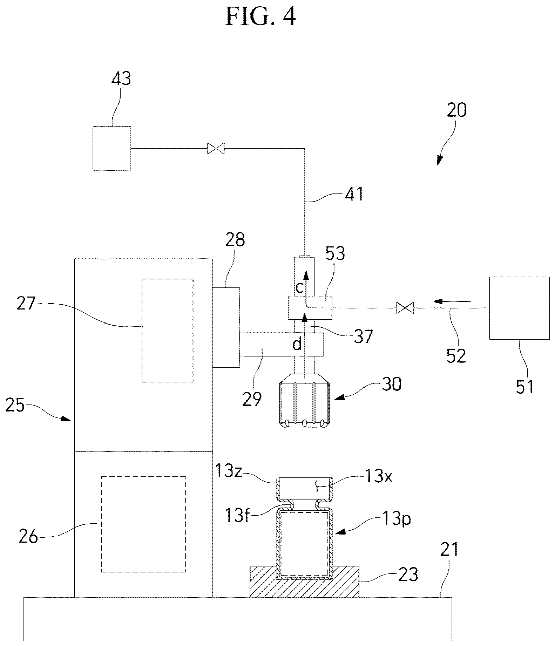

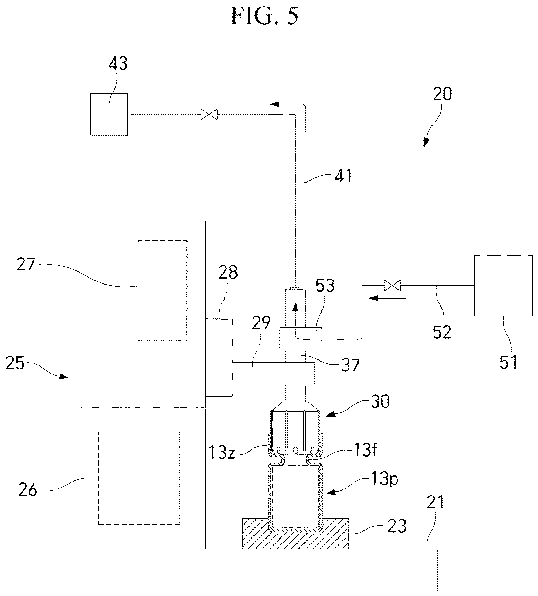

FIGS. 4 and 5 are diagrams for describing another configuration and an operating method of the suction apparatus according to embodiments of the present disclosure. As shown in the drawings, the suction head 30 may be installed to ascend or descend above a vertical upper port of the positioning jig 23. FIG. 4 shows a state in which the suction head 30 is raised, and FIG. 5 shows a state in which the suction head 30 is inserted into the receiving space 13x of the battery can.

Meanwhile, the negative pressure supply unit in the suction apparatus 20 of FIGS. 4 and 5 may include an air supply part 51, a throttle valve 53, and a trap 43.

The air supply part 51 is connected to the throttle valve 53 through an air tube 52 and may supply compressed air to the throttle valve 53. The air supply part 51 may be an air compressor. The compressed air supplied from the air supply part 51 may pass through the throttle valve 53 in a direction of an arrow c and then move toward the fluorine resin tube 41 ( i.e., toward the discharge pipe 37 ) . The throttle valve 53 may generate a negative pressure according to a known venturi principle. That is, when the compressed air passes through the throttle valve 53 at a high speed, a negative pressure may be induced. Due to the induced negative pressure, the suction head 30 may suction the remaining electrolyte 10. The remaining electrolyte 10 may be discharged in a direction of an arrow d due to the action of the induced negative pressure.

A mixture of the air passing through the throttle valve 53 and the remaining electrolyte 10 is moved to the trap 43 through an extension tube, e.g., the fluorine resin tube 41. The remaining electrolyte 10 may be collected in the trap 43 and discharged into the atmosphere.

Meanwhile, a sealing member may be additionally installed on a lower portion of the suction head 30.

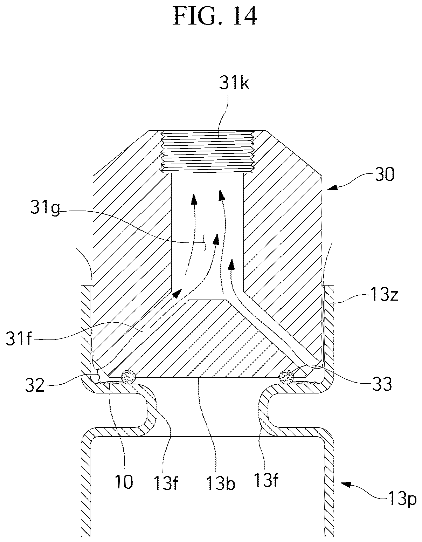

FIG. 14 is a cross-sectional view illustrating another example of the suction head 30 according to embodiments of the present disclosure.

As shown in the drawing, an O-ring 33 may be installed on a bottom surface of the suction head 30 as a sealing member. The O-ring 33 may seal a gap between the beading portion 13f and the bottom surface 31b of the suction head 30. Since the beading portion 13f and the bottom surface of the suction head 30 are sealed through the O-ring 33, negative pressure does not affect an internal space of the battery can 13p.

Another effect that can be obtained by applying the O-ring 33 is that deformation of the beading portion 13f is prevented, and abrasion of the bottom surface of the suction head 30 is prevented.

When the suction head 30 descends to reach the beading portion 13f, a downward force of the suction head 30 is transmitted to the beading portion 13f, which may cause the beading portion 13f to deform. However, when the O-ring 33 is applied, the deformation of the beading portion 13f can be prevented by the O-ring. This is because the O-ring 33 may serve as a buffer.

In addition, since the bottom surface of the suction head 30 does not directly come into contact with the beading portion 13f, abrasion of the bottom surface of the suction head 30 can also be prevented. This can have the effect of extending a lifetime of the suction head 30.

The O-ring 33 will be further described as follows.

The O-ring 33 may serve to improve performance of the negative pressure system. For example, since the suction space 32 and the internal space of the battery can are blocked by the O-ring 33, when a suction action occurs at the suction head 30, the electrolyte component does not rise from the battery can so that a removal speed of the remaining electrolyte 10 can be accelerated.

In addition, the O-ring 33 may absorb a minute vibration that may occur during the suction process. The vibration generated during the process of suctioning the electrolyte may have a negative effect on the battery can, but since the O-ring 33 absorbs the vibration, unnecessary friction and impact between the battery can and the suction head can be reduced.

Ultimately, the application of O-ring 33 may serve not only to efficiently remove the electrolyte, but also to protect the suction head and the battery can and improve the overall durability of the apparatus.

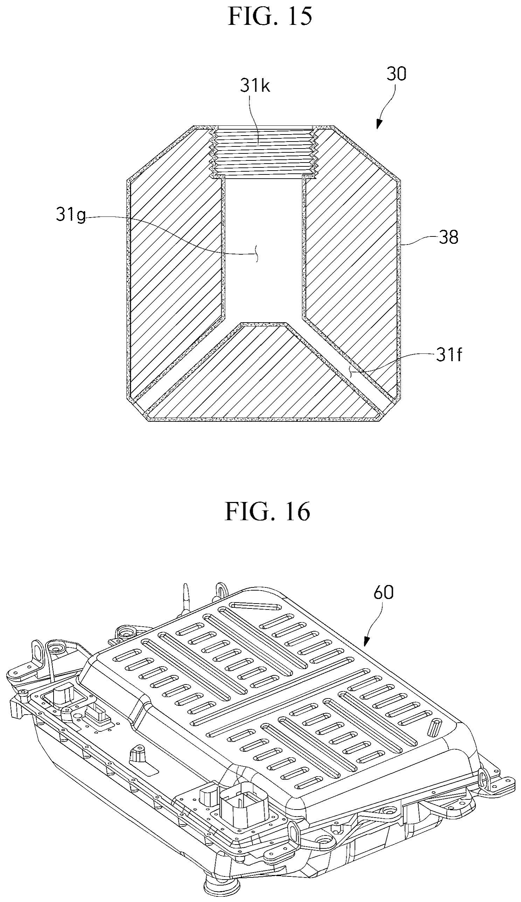

FIG. 15 is a cross-sectional view illustrating still another example of the suction head 30 according to embodiments of the present disclosure.

As shown in the drawing, a protective cover 38 may be stacked on an outer surface of the suction head 30. The protective cover 38 may prevent the suction head 30 from coming into contact with the electrolyte. In particular, the protective cover 38 is applied on the first passage 31f, the second passage 31g, and the female thread 31k. The protective cover 38 may be made of a synthetic resin, rubber, or silicone. When the suction head 30 is immersed in a container containing a molten synthetic resin, rubber, or silicone and then taken out, the protective cover 38 may be applied on the entire surface thereof.

As described herein, the protective cover 38 may protect the suction head 30 from the electrolyte, thereby preventing the electrolyte from coming into direct contact with the suction head. Thus, physical abrasion and corrosion of the suction head 30 can be minimized, and the overall durability of the apparatus can be increased.

A thickness of protective cover 38 may be adjusted according to design requirements. By applying a protective cover with an appropriate thickness, a protective layer may provide sufficient protection without being too thick and hindering functionality. The suction head 30 to which the protective cover 38 is applied is surrounded with the protective cover so that the suction head 30 is physically protected by the protective cover 38 and thus has a long lifetime.

FIG. 16 is a perspective view illustrating a secondary battery pack 60 in which the cylindrical battery of FIG. 1 is embedded.

The secondary battery pack 60 may be manufactured by embedding a plurality of secondary battery modules in a pack housing designed to be mounted on an actual product. The pack housing can include a fastening part and an electrical outlet necessary for mounting on a product. In FIG. 16, for convenience of illustration, bus bars for electrical connection of secondary batteries, cooling units, external terminals, and other related elements are omitted. The secondary battery pack can be mounted on a vehicle. The vehicle can be, for example, an electric vehicle, a hybrid vehicle, or a plug-in hybrid vehicle. The vehicle includes a four-wheel drive or two-wheel drive vehicle.

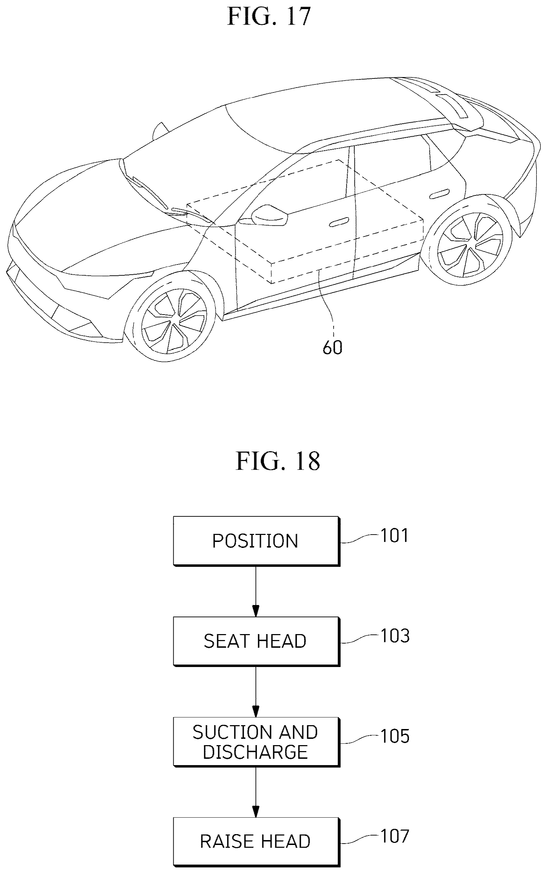

FIG. 17 is a diagram illustrating a state in which the secondary battery pack 60 of FIG. 16 is applied to a vehicle. In FIG. 17, a secondary battery pack 60 is mounted on the lower part of a vehicle body. The vehicle operates by receiving power from the secondary battery pack 60 according to embodiments of the present disclosure.

FIG. 18 is a flowchart illustrating a method of manufacturing a secondary battery according to embodiments of the present disclosure.

As shown in the drawing, the method of manufacturing a secondary battery according to the present embodiment may include a positioning operation 101, a head seating operation 103, a suctioning/discharging operation 105, and a head ascending operation 107.

The positioning operation 101 may be a process of mounting the battery can 13p into which an electrolyte is injected on the positioning jig 23. Since the battery can 13p is supported on the positioning jig 23, the battery can 13p is positioned below the suction head 30 vertically as shown in FIG. 2.

The subsequent head seating operation 103 may be a process of seating the suction head 30 in the receiving space 13x of the battery can 13p, which is home-positioned. That is, the suction head 30 descends and thus the bottom surface of the suction head 30 comes into contact with the beading portion 13f.

When the head seating operation 103 is completed, the suctioning/discharging operation 105 may be performed subsequently, e.g., the remaining electrolyte in the beading portion 13f may be suctioned so as to move the remaining electrolyte upwardly alone an inner passage formed in an interior of the suction head 30 when a negative pressure supply unit is operating. The suctioning/discharging operation 105 may be a process of providing a negative pressure into the suction head 30 to suction and discharge the remaining electrolyte 10 remaining on the beading portion 13f to the outside. In other words, the suctioning/discharging operation 105 is a process of suctioning the electrolyte by applying the negative pressure to the first passage 31f and the second passage 31g through the negative pressure supply unit.

In addition, the head ascending operation 107 may be a process of raising the suction head 30 and returning the suction head 30 to its original position after the completion of the suctioning/discharging operation 105. After the head ascending operation 107 is completed, a worker unloads the battery can from the positioning jig 23 and transfers the battery can for a next process.

According to the above suction apparatus for removing remaining electrolyte in secondary battery manufacturing and a method of manufacturing a secondary battery of the present disclosure, by quickly suctioning and removing an electrolyte remaining in a beading portion of a can using vacuum pressure, corrosion or whitening caused by the electrolyte can be prevented, and a suction space for efficient suction of the electrolyte can be secured to prevent the electrolyte from scattering to surrounding areas when a negative pressure is applied.

Although the present disclosure has been described herein with respect to embodiments thereof, the present disclosure is not limited thereto. Various modifications and variations can be made thereto by those skilled in the art within the scope of the present disclosure as defined by the appended claims and their equivalents.

Embodiments are set out in the following clauses:
1. A suction apparatus for removing a remaining electrolyte in secondary battery manufacturing, the suction apparatus comprising:
   a positioning jig configured to provide a receiving space that opens upwardly at an upper side of a beading portion and position a battery can in which an electrolyte is injected;
   a suction head installed to ascend or descend above the positioning jig and seated in the receiving space when an electrolyte remaining in the beading portion is suctioned and discharged;
   a head ascending/descending part configured to raise and lower the suction head; and
   a negative pressure supply unit configured to provide a negative pressure to the suction head while the suction head is seated in the receiving space and suction and discharge the remaining electrolyte.
2. The suction apparatus according to clause 1, wherein:
   the battery can is a can for a cylindrical battery, and a crimping target portion is positioned vertically on the beading portion before performing crimping processing, and the receiving space is a space formed by the beading portion and the crimping target portion; and
   the suction head is surrounded by the crimping target portion while seated in the receiving space.
3. The suction apparatus according to clause 2, wherein:
   a lower edge of the suction head is caught on the beading portion while seated in the receiving space; and
   an inner passage is formed in an interior of the suction head to suction the remaining electrolyte on the beading portion to pass the remaining electrolyte upwardlywhen a negative pressure supply unit is operating.
4. The suction apparatus according to clause 3, wherein a lower inclined surface is formed on the lower edge of the suction head to provide a suction space between the suction head and the beading portion.
5. The suction apparatus according to clause 4, wherein the inner passage of the suction head comprises:
   a plurality of first passages of which a lower end portion opens toward the lower inclined surface and which are symmetric based on a central axis of the suction head; and
   a second passage connected to upper end portions of the first passage and the negative pressure supply unit.
6. The suction apparatus according to clause 5, wherein:
   the second passage is formed at a central axis portion of the suction head, and the first passage is inclined upwardly from the lower inclined surface toward the second passage; and
   a flow cross-sectional area of the second passage is greater than a sum of flow cross-sectional areas of all of the first passages.
7. The suction apparatus according to clause 4, 5 or 6, wherein introduction passages are formed on an outer surface of the suction head to guide outside air to the suction space.
8. The suction apparatus according to any preceding clause, wherein the head ascending/descending part comprises an actuator configured to raise and lower the suction head and a controller configured to control the actuator.
9. The suction apparatus according to clause 3 or any clause dependent on clause 3, wherein:
   a discharge pipe connected to the inner passage of the suction head is further provided in an upper portion of the suction head; and
   the negative pressure supply unit comprises:
      an air supply part configured to supply compressed air;
      a throttle valve installed on the discharge pipe and configured to move air supplied from the air supply part and provide a negative pressure in the suction head; and
      a trap connected to the discharge pipe through an extension tube and configured to accommodate the electrolyte discharged after passing through the throttle valve.
10. A suction head which provides a receiving space that opens upwardly at an upper side of a beading portion, is installed to ascend or descend above a battery can in which an electrolyte is injected, and suctions and discharges a remaining electrolyte in the beading portion due to a negative pressure provided externally while seated in the receiving space and in which an inner passage configured to move the electrolyte is formed.
11. The suction head according to clause 10, wherein:
   the battery can is a can for a cylindrical battery, and a crimping target portion is positioned vertically on the beading portion before performing crimping processing, and the receiving space is a space formed by the beading portion and the crimping target portion; and
   the suction head has a diameter that is smaller than a diameter of a crimping target portion so as to allow a lower edge of the suction head to be caught on the beading portion while seated in the receiving space.
12. The suction head according to clause 11, wherein a lower inclined surface is formed on the lower edge of the suction head to provide a suction space between the suction head and the beading portion.
13. The suction head according to clause 11 or 12, wherein a sealing member configured seal a gap between the beading portion and a bottom surface of the suction head is further provided in a lower portion of the suction head.
14. A method of manufacturing a secondary battery, comprising:
   a positioning operation of providing a receiving space that opens upwardly at an upper side of a beading portion and positioning a battery can in which an electrolyte is injected;
   a head seating operation of seating a suction head in the receiving space of the battery can that is home-positioned;
   a suctioning/discharging operation of providing a negative pressure into the suction head and suctioning and discharging the electrolyte remaining in the beading portion; and
   a head ascending operation of raising the suction head after the suctioning/discharging operation is completed.
15. The method according to clause 14, wherein:
   a lower edge of the suction head is caught on the beading portion while seated in the receiving space, and an inner passage is formed in an interior of the suction head to suction the remaining electrolyte on the beading portion to move the remaining electrolyte upwardly when a negative pressure supply unit is operating; and
   the suctioning/discharging operation is a process of suctioning the electrolyte by applying a negative pressure to the inner passage through the negative pressure supply unit.

## Claims

1. A suction apparatus for removing a remaining electrolyte in secondary battery manufacturing, the suction apparatus comprising:
a positioning jig configured to provide a receiving space that opens upwardly at an upper side of a beading portion and to position a battery can in which an electrolyte is injected;
a suction head installed to ascend or descend above the positioning jig and seated in the receiving space when an electrolyte remaining in the beading portion is suctioned and discharged;
a head ascending/descending part configured to raise and lower the suction head; and
a negative pressure supply unit configured to provide a negative pressure to the suction head while the suction head is seated in the receiving space and suction and discharge the remaining electrolyte.

2. The suction apparatus as claimed in claim 1, wherein:
the battery can is a can for a cylindrical battery, and a crimping target portion is positioned vertically on the beading portion before performing crimping processing, and the receiving space is a space formed by the beading portion and the crimping target portion; and
the suction head is surrounded by the crimping target portion while seated in the receiving space.

3. The suction apparatus as claimed in claim 2, wherein:
a lower edge of the suction head is caught on the beading portion while seated in the receiving space; and
an inner passage is formed in an interior of the suction head to suction the remaining electrolyte on the beading portion to pass the remaining electrolyte upwardly when a negative pressure supply unit is operating.

4. The suction apparatus as claimed in claim 3, wherein a lower inclined surface is formed on the lower edge of the suction head to provide a suction space between the suction head and the beading portion.

5. The suction apparatus as claimed in claim 4, wherein the inner passage of the suction head comprises:
a plurality of first passages of which a lower end portion opens toward the lower inclined surface and which are symmetric based on a central axis of the suction head; and
a second passage connected to upper end portions of the first passage and the negative pressure supply unit.

6. The suction apparatus as claimed in claim 5, wherein:
the second passage is formed at a central axis portion of the suction head, and the first passage is inclined upwardly from the lower inclined surface toward the second passage; and
a flow cross-sectional area of the second passage is greater than a sum of flow cross-sectional areas of all of the first passages.

7. The suction apparatus as claimed in claim 4, 5 or 6, wherein introduction passages are formed on an outer surface of the suction head to guide outside air to the suction space.

8. The suction apparatus as claimed in any preceding claim, wherein the head ascending/descending part comprises an actuator configured to raise and lower the suction head and a controller configured to control the actuator.

9. The suction apparatus as claimed in claim 3 or any claim dependent on claim 3, wherein:
a discharge pipe connected to the inner passage of the suction head is further provided in an upper portion of the suction head; and
the negative pressure supply unit comprises:
an air supply part configured to supply compressed air;
a throttle valve installed on the discharge pipe and configured to move air supplied from the air supply part and provide a negative pressure in the suction head; and
a trap connected to the discharge pipe through an extension tube and configured to accommodate the electrolyte discharged after passing through the throttle valve.

10. A suction head which provides a receiving space that opens upwardly at an upper side of a beading portion, is installable to ascend or descend above a battery can in which an electrolyte is injected, and is capable of suctioning and discharging a remaining electrolyte in the beading portion due to a negative pressure provided externally while seated in the receiving space and in which an inner passage configured to move the electrolyte is formed.

11. The suction head as claimed in claim 10, wherein:
the battery can is a can for a cylindrical battery, and a crimping target portion is positioned vertically on the beading portion before performing crimping processing, and the receiving space is a space formed by the beading portion and the crimping target portion; and
the suction head has a diameter that is smaller than a diameter of a crimping target portion so as to allow a lower edge of the suction head to be caught on the beading portion while seated in the receiving space.

12. The suction head as claimed in claim 11, wherein a lower inclined surface is formed on the lower edge of the suction head to provide a suction space between the suction head and the beading portion.

13. The suction head as claimed in claim 11 or 12, wherein a sealing member configured to seal a gap between the beading portion and a bottom surface of the suction head is further provided in a lower portion of the suction head.

14. A method of manufacturing a secondary battery, comprising:
a positioning operation of providing a receiving space that opens upwardly at an upper side of a beading portion and positioning a battery can in which an electrolyte is injected;
a head seating operation of seating a suction head in the receiving space of the battery can that is home-positioned;
a suctioning/discharging operation of providing a negative pressure into the suction head and suctioning and discharging the electrolyte remaining in the beading portion; and
a head ascending operation of raising the suction head after the suctioning/discharging operation is completed.

15. The method as claimed in claim 14, wherein:
a lower edge of the suction head is caught on the beading portion while seated in the receiving space, and an inner passage is formed in an interior of the suction head to suction the remaining electrolyte on the beading portion to move the remaining electrolyte upwardly when a negative pressure supply unit is operating; and
the suctioning/discharging operation is a process of suctioning the electrolyte by applying a negative pressure to the inner passage through the negative pressure supply unit.
